# EUROPEAN PATENT APPLICATION

(11) **EP 2 493 233 A1**
(43) Date of publication of application: **29.08.2012**
(21) Application number: 11156251.8
(22) Date of filing: 28.02.2011
(51) Int. Cl.: H04W 12/08, H04L 29/06

(54) **Wireless communication system with nfc-controlled access and related methods**

(71) Applicant: Research In Motion Limited, Waterloo, ON N2L 3W8 (CA)
(72) Inventor: Walker, David Ryan, Waterloo Ontario N2L 3W8 (CA)
(74) Representative: Greenaway, Martin William

(57) **Abstract**

A wireless communication system may include a wireless access point including a first wireless transceiver and a controller associated therewith and providing wireless communications within a defined space having an entrance, and mobile wireless communications devices, each including a first near field communications (NFC) device and a second wireless transceiver communicating with the first wireless transceiver. The wireless communication system may also include a second NFC device adjacent the entrance of the defined space, and a third NFC device within the defined space. The controller may permit wireless communications of a given mobile wireless communications device with the wireless access point based upon communication of the corresponding first NFC device with the second and third NFC devices.

## Description

### Technical Field

This application relates to the field of communications, and, more particularly, to wireless communications systems and related methods.

### Background

Mobile communication systems continue to grow in popularity and have become an integral part of both personal and business communications. Various mobile devices now incorporate Personal Digital Assistant (PDA) features such as calendars, address books, task lists, calculators, memo and writing programs, media players, games, etc. These multi-function devices usually allow electronic mail (email) messages to be sent and received wirelessly, as well as access the internet via a cellular network and/or a wireless local area network (WLAN) , for example.

Some mobile devices incorporate contactless card technology and/or near field communication (NFC) chips. NFC technology is commonly used for contactless short-range communications based on radio frequency identification (RFID) standards, using magnetic field induction to enable communication between electronic devices, including mobile wireless communications devices. This short-range high frequency wireless communications technology exchanges data between devices over a short distance, such as only a few centimeters.

### Brief Description of the Drawings

FIG. 1 is a schematic block diagram of an example embodiment of a wireless communication system.

FIG. 2 is a flowchart illustrating method aspects associated with operation of the wireless communication system of FIG. 1.

FIG. 3 is a schematic block diagram illustrating example components of a mobile wireless communications device that may be used with the wireless communication system of FIG. 1.

### Detailed Description of the Preferred Embodiments

The present description is made with reference to the accompanying drawings, in which embodiments are shown. However, many different embodiments may be used, and thus the description should not be construed as limited to the embodiments set forth herein. Rather, these embodiments are provided so that this disclosure will be thorough and complete. Like numbers refer to like elements throughout.

Generally speaking, a wireless communication system is disclosed herein that may comprise a wireless access point comprising a first wireless transceiver and a controller associated with the first wireless transceiver and configured to provide wireless communications within a defined space having an entrance. The wireless communication system may include a plurality of mobile wireless communications devices, each comprising a first near field communications (NFC) device and a second wireless transceiver configured to communicate the first wireless transceiver. The wireless communication system may also include a second NFC device adjacent the entrance of the defined space, and a third NFC device within the defined space. The controller may be configured to permit wireless communications of a given mobile wireless communications device with the wireless access point based upon communication of the corresponding first NFC device with the second and third NFC devices.

In particular, the controller may be configured to permit wireless communications of the given mobile wireless communications device with the wireless access point based upon sequential communication of the corresponding first NFC device with the second and third NFC devices. In some embodiments, each mobile wireless communications device may have a unique identification associated therewith, and the second and third NFC devices may be configured to receive a respective unique identification from adjacent mobile wireless communications devices.

More specifically, the controller may be configured to permit wireless communications of the given mobile wireless communications device when a same respective unique identification is sequentially received at the second and third NFC devices. The controller may be configured to disable wireless communications of the given mobile wireless communications device based upon a subsequent communication of the corresponding first NFC device with the second NFC device.

In other embodiments, the wireless communication system may further comprise at least one other wireless communications device within the defined space, and the controller may be configured to permit wireless communication between the given mobile wireless communications device and the at least one other wireless communications device also based upon the communication of the corresponding first NFC device with the second and third NFC devices. For example, the companion devices may comprise at least one of a printer device, a projector device, a photocopying device, a scanner device, a fax machine, a display device, or an external speaker device.

Additionally, the first and second wireless transceivers may each comprise a wireless local area network (e.g., IEEE 802.11 (WiFi)) transceiver. The controller may be configured to permit wireless communications of the given mobile wireless communications device further based receipt of an electronic payment associated therewith. For example, each mobile wireless communications device may comprise at least one of a mobile cellular wireless communications device, a laptop personal computer device, or a tablet computing device.

Another example aspect is directed to a wireless access point for a wireless communication system comprising a plurality of mobile wireless communications devices. Each mobile wireless communications device may comprise a first NFC device and a second wireless transceiver. The wireless communications system also may include a second NFC device adjacent the entrance of a defined space, and a third NFC device within the defined space. The wireless access point may comprise a first wireless transceiver and a controller associated therewith and configured to provide wireless communications within the defined space having the entrance. The controller may be configured to permit wireless communications of a corresponding second wireless transceiver of a given mobile wireless communications device with the first wireless transceiver based upon communication of the corresponding first NFC device with the second and third NFC devices.

Another example aspect is directed to a method of operating a wireless access point in a wireless communication system for providing wireless communications within a defined space having an entrance. The wireless communication system may include a plurality of mobile wireless communications devices each comprising a first NFC device, a second NFC device adjacent the entrance of the defined space, and a third NFC device within the defined space. The method may comprise permitting wireless communications of a given mobile wireless communications device with the wireless access point based upon communication of a corresponding first NFC device with the second and third NFC devices.

Example mobile wireless communications devices may include portable or personal media players (e.g., music or MP3 players, video players, etc.), remote controls (e.g., television or stereo remotes, etc.), portable gaming devices, portable or mobile telephones, smartphones, tablet computers, etc.

By way of background, NFC is a short-range wireless communications technology in which NFC-enabled devices are "swiped," "bumped," or otherwise moved in close proximity to communicate. In one non-limiting example implementation, NFC may operate at 13.56 MHz and with an effective range of about 10cm, but other suitable versions of near-field communication which may have different operating frequencies, effective ranges, etc., for example, may also be used.

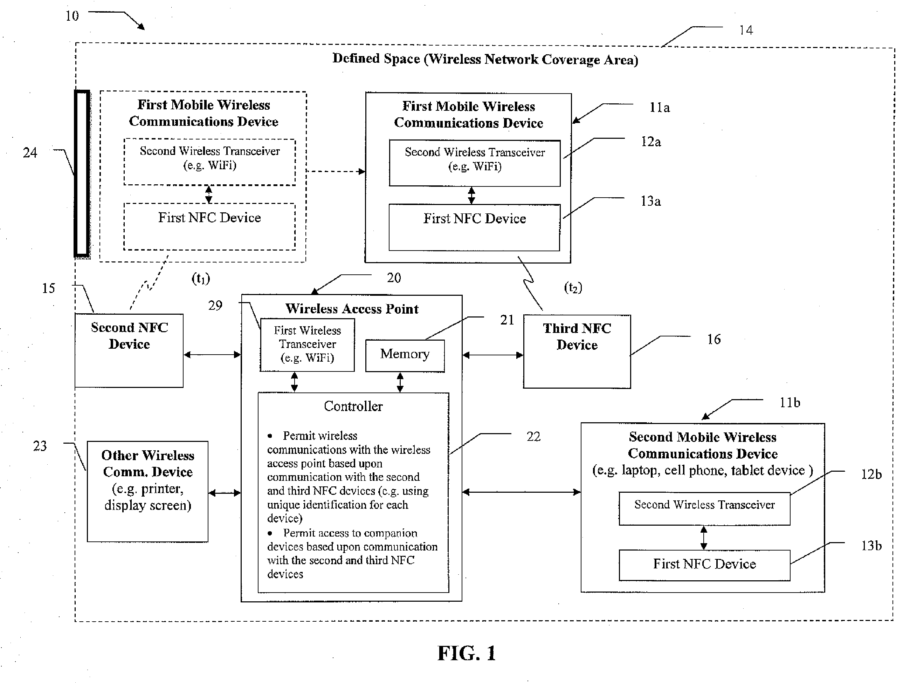

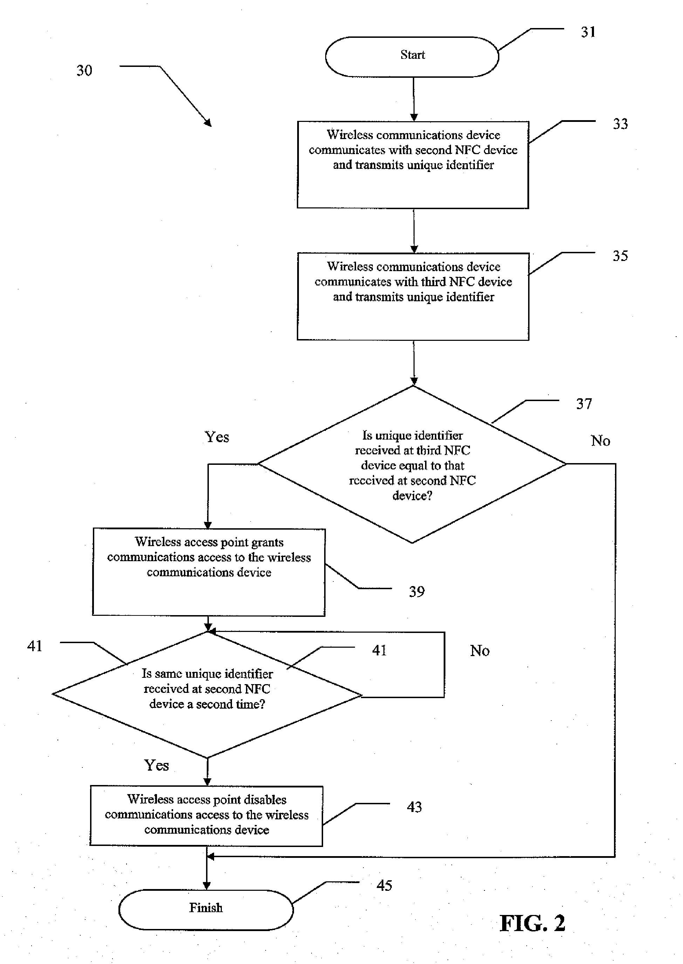

Referring now to FIG. 1, a wireless communication system **10** according to the present disclosure is now described. Moreover, with reference additionally to FIG. 2, a flowchart **30** illustrates a method of operating the wireless communication system **10** and begins at Block **31**. The wireless communication system **10** illustratively includes a wireless access point **20**. The wireless access point **20** illustratively includes a memory **21**, and a controller **22** coupled to the memory and configured to provide wireless communications within a defined space **14** (shown with dashed lines). For example, the defined space **14** may comprise a secured space having controlled access, such as an office building or a retail establishment. The defined space illustratively includes an entrance **24**. In the illustrated embodiment, the wireless access point **20** comprises a first wireless transceiver **29**, for example, an IEEE 802.11 (WiFi) transceiver.

The wireless communication system **10** illustratively includes a plurality of mobile wireless communications devices **11a-11b.** For example, each mobile wireless communications device **11a-11b** may comprise at least one of a portable or personal media player (e.g., music or MP3 players, video players, etc.), a remote control (e.g., television or stereo remotes, etc.), a portable gaming device, a portable or mobile telephone, a smartphone, a tablet computer, etc. Each mobile wireless communications device **11a-11b** illustratively includes a first NFC device **13a-13b,** which may include NFC transceivers and associated control circuitry, for example.

Additionally, each mobile wireless communications device **11a-11b** illustratively includes a second wireless transceiver **12a-12b** configured to communicate with the wireless access point **20**. For example, the second wireless transceivers **12a-12b** may each comprise a wireless local area network (WLAN) or WiFi transceiver, an IEEE 802.16 (WiMAX) transceiver, etc. Other suitable transceivers (e.g., local area network, metropolitan area network transceivers, etc.) may also be used.

Furthermore, the wireless communication system **10** illustratively includes a second NFC device **15** adjacent the entrance **24** of the defined space **14**, and a third NFC device **16** within the defined space **14**. For example, the second NFC device **15** may be placed at an entrance door so that the second NFC device is swiped as the mobile wireless communications device **11a** enters (or exits) the defined space **14** (Block **33**). In retail establishment applications, the third NFC device **16** may be placed directly adjacent a point-of-sale terminal, i.e., only allowing authorized customers access to the third NFC device. Nevertheless, the third NFC device **16** may generally be positioned within the defined space **14** so that only authorized devices have access thereto (Block **35) .** For example, the second and third NFC devices **15-16** may be associated with kiosk devices or control panel devices.

In cooperation with the second and third NFC devices **15-16,** the controller **22** is illustratively configured to permit wireless communications of a given mobile wireless communications device (shown as **11a**) with the wireless access point **20** based upon communication of the corresponding first NFC device **13a** with the second and third NFC devices **15, 16** (Blocks **33, 35**). In an example embodiment, the controller **22** permits network access based upon the respective first NFC device **13a** of the given mobile wireless communications device **11a** being swiped sequentially at the second and third NFC devices **15, 16**. In other words, the given mobile wireless communications device **11a** is granted network access once it is established that the user is authorized, i.e. physical access to the interior of the defined space **14** is equated to authorized use.

In this illustrated embodiment, each mobile wireless communications device **11a-11b** has a unique identification associated therewith. For example, the unique identification may comprise a Media Access Control address (MAC address), a Mobile Equipment Identifier (MEID), an International Mobile Equipment Identity (IMEI), etc. In such embodiments, the second and third NFC devices **15-16** may be configured to receive a respective unique identification from adjacent (swiped) mobile wireless communications devices **11a-11b** and to correlate the unique identifiers to determine whether a mobile wireless communications device is authorized. That is, the controller **22** is illustratively configured to permit the given mobile wireless communications device **11a** to access wireless communications in the wireless communication system when a same respective unique identification associated therewith is sequentially received at the second and third NFC devices **15-16** (Blocks **37, 39**). In some example embodiments, the unique identification may be validated or authenticated from a UID database.

Moreover, the controller **22** is illustratively configured to disable wireless communications of the given mobile wireless communications device **11a** with the wireless access point **20** based upon a subsequent communication of the corresponding first NFC device **13a** with the second NFC device **15.** In particular, when the given mobile wireless communications device 11a is swiped at the second NFC device **15** a second time, thereby indicating the given mobile wireless communications device **11a** has left the defined space **14,** access to the wireless access point **20** is disabled (Blocks **41, 43, & 45**) .

The wireless communication system **10** also illustratively includes one or more other companion wireless communications devices **23**. For example, the one or more other wireless communications devices **23** may comprise a printer device. As another example, the one or more other wireless communications devices **23** may comprise a photocopying device. As another example, the one or more other wireless communications devices **23** may comprise a scanner device. As another example, the one or more other wireless communications devices **23** may comprise a fax machine. As another example, the one or more other wireless communications devices **23** may comprise a projector device. As another example, the one or more other wireless communications devices **23** may comprise an external display device. As another example, the one or more other wireless communications devices **23** may comprise an external speaker device. The one or more other wireless communications devices **23** may comprise additional types of devices or resources. The one or more other wireless communications devices **23** may comprise a combination of any of the foregoing example devices. In the illustrated embodiment, the controller **22** is configured to permit access to the companion device **23** in the defined space **14** for the given mobile wireless communications device **11a** based upon communication of the corresponding first NFC device **13a** with the second and third NFC devices **15-16**. As will be appreciated, the one or more other wireless communications devices **23** is optional and may be excluded in other embodiments.

Moreover, in certain embodiments, the controller **22** may be configured to permit wireless communications of the given mobile wireless communications device **11a** further based upon receipt of an electronic payment associated therewith. Particularly, this feature is advantageous in embodiments where the defined space **14** is related to a retail establishment.

The wireless communication system **10** advantageously permits only authorized mobile wireless communications devices **11a** access to network resources, such as access to the wireless access point **20**, for example. Access to network resources is selectively allocated based upon physical reach to the defined space **14**. Indeed, reaching only the perimeter of the defined space **14** would not provide access since the first mobile wireless communications device **11a** needs to be swiped at both the second NFC device **15** (which is located at the entrance **24** to the defined space **14**) and the third NFC device **16** (which is located within the defined space), i.e. the authorized mobile wireless communications device has physical access (reaches) to the interior of the defined space.

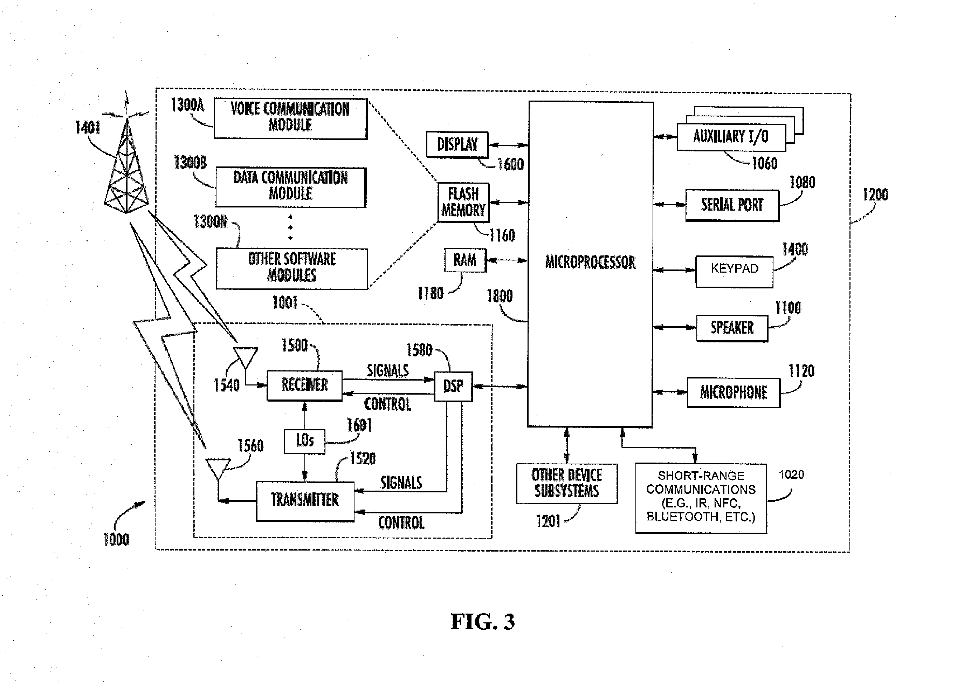

Example components of a mobile wireless communications device **1000** that may be used in accordance with the above-described embodiments are further described below with reference to FIG. 3. The device **1000** illustratively includes a housing **1200**, a keyboard or keypad **1400** and an output device **1600.** The output device shown is a display **1600**, which may comprise a full graphic liquid crystal display (LCD). Other types of output devices may alternatively be utilized. A processing device **1800** is contained within the housing **1200** and is coupled between the keypad **1400** and the display **1600**. The processing device **1800** controls the operation of the display **1600**, as well as the overall operation of the mobile device **1000**, in response to actuation of keys on the keypad **1400**.

The housing **1200** may be elongated vertically, or may take on other sizes and shapes (including clamshell housing structures). The keypad may include a mode selection key, or other hardware or software for switching between text entry and telephony entry.

In addition to the processing device **1800**, other parts of the mobile device **1000** are shown schematically in FIG. 3. These include a communications subsystem **1001**; a short-range communications subsystem **1020**; the keypad **1400** and the display **1600**, along with other input/output devices **1060**, **1080**, **1100** and **1120**; as well as memory devices **1160**, **1180** and various other device subsystems **1201**. The mobile device **1000** may comprise a two-way RF communications device having data and, optionally, voice communications capabilities. In addition, the mobile device **1000** may have the capability to communicate with other computer systems via the Internet.

Operating system software executed by the processing device **1800** is stored in a persistent store, such as the flash memory **1160,** but may be stored in other types of memory devices, such as a read only memory (ROM) or similar storage element. In addition, system software, specific device applications, or parts thereof, may be temporarily loaded into a volatile store, such as the random access memory (RAM) **1180**. Communications signals received by the mobile device may also be stored in the RAM **1180**.

The processing device **1800**, in addition to its operating system functions, enables execution of software applications **1300A-1300N** on the device **1000.** A predetermined set of applications that control basic device operations, such as data and voice communications **1300A** and **1300B,** may be installed on the device **1000** during manufacture. In addition, a personal information manager (PIM) application may be installed during manufacture. The PIM may be capable of organizing and managing data items, such as e-mail, calendar events, voice mails, appointments, and task items. The PIM application may also be capable of sending and receiving data items via a wireless network **1401**. The PIM data items may be seamlessly integrated, synchronized and updated via the wireless network **1401** with corresponding data items stored or associated with a host computer system.

Communication functions, including data and voice communications, are performed through the communications subsystem **1001**, and possibly through the short-range communications subsystem **1020**. The communications subsystem **1001** includes a receiver **1500**, a transmitter **1520**, and one or more antennas **1540** and **1560**. In addition, the communications subsystem **1001** also includes a processing module, such as a digital signal processor (DSP) **1580**, and local oscillators (LOs) **1601**. The specific design and implementation of the communications subsystem **1001** is dependent upon the communications network in which the mobile device **1000** is intended to operate. For example, a mobile device **1000** may include a communications subsystem **1001** designed to operate with the Mobitex™, Data TAC™ or General Packet Radio Service (GPRS) mobile data communications networks, and also designed to operate with any of a variety of voice communications networks, such as Advanced Mobile Phone System (AMPS), time division multiple access (TDMA), code division multiple access (CDMA), Wideband code division multiple access (W-CDMA), personal communications service (PCS), GSM (Global System for Mobile Communications), enhanced data rates for GSM evolution (EDGE), etc. Other types of data and voice networks, both separate and integrated, may also be utilized with the mobile device **1000**. The mobile device **1000** may also be compliant with other communications standards such as 3GSM, 3rd Generation Partnership Project (3GPP), Universal Mobile Telecommunications System (UMTS), 4G, etc.

Network access requirements vary depending upon the type of communication system. For example, in the Mobitex and DataTAC networks, mobile devices are registered on the network using a unique personal identification number or PIN associated with each device. In GPRS networks, however, network access is associated with a subscriber or user of a device. A GPRS device therefore typically involves use of a subscriber identity module, commonly referred to as a SIM card, in order to operate on a GPRS network.

When required network registration or activation procedures have been completed, the mobile device **1000** may send and receive communications signals over the communication network **1401**. Signals received from the communications network **1401** by the antenna **1540** are routed to the receiver **1500**, which provides for signal amplification, frequency down conversion, filtering, channel selection, etc., and may also provide analog to digital conversion. Analog-to-digital conversion of the received signal allows the DSP **1580** to perform more complex communications functions, such as demodulation and decoding. In a similar manner, signals to be transmitted to the network **1401** are processed (e.g. modulated and encoded) by the DSP **1580** and are then provided to the transmitter **1520** for digital to analog conversion, frequency up conversion, filtering, amplification and transmission to the communication network **1401** (or networks) via the antenna **1560**.

In addition to processing communications signals, the DSP **1580** provides for control of the receiver **1500** and the transmitter **1520**. For example, gains applied to communications signals in the receiver **1500** and transmitter **1520** may be adaptively controlled through automatic gain control algorithms implemented in the DSP **1580**.

In a data communications mode, a received signal, such as a text message or web page download, is processed by the communications subsystem **1001** and is input to the processing device **1800**. The received signal is then further processed by the processing device **1800** for an output to the display **1600**, or alternatively to some other auxiliary I/O device **1060**. A device may also be used to compose data items, such as e-mail messages, using the keypad **1400** and/or some other auxiliary I/O device **1060**, such as a touchpad, a rocker switch, a thumb-wheel, or some other type of input device. The composed data items may then be transmitted over the communications network **1401** via the communications subsystem **1001**.

In a voice communications mode, overall operation of the device is substantially similar to the data communications mode, except that received signals are output to a speaker **1100**, and signals for transmission are generated by a microphone **1120**. Alternative voice or audio I/O subsystems, such as a voice message recording subsystem, may also be implemented on the device **1000**. In addition, the display **1600** may also be utilized in voice communications mode, for example to display the identity of a calling party, the duration of a voice call, or other voice call related information.

The short-range communications subsystem enables communication between the mobile device **1000** and other proximate systems or devices, which need not necessarily be similar devices. For example, the short-range communications subsystem may include an infrared device and associated circuits and components, a Bluetooth™ communications module to provide for communication with similarly-enabled systems and devices, or a NFC sensor for communicating with a NFC device or NFC tag via NFC communications.

Many modifications and other embodiments will come to the mind of one skilled in the art having the benefit of the teachings presented in the foregoing descriptions and the associated drawings. Therefore, it is understood that various modifications and embodiments are intended to be included within the scope of the appended claims.

## Claims

1. A wireless communication system comprising:
a wireless access point comprising a first wireless transceiver and a controller associated therewith and configured to provide wireless communications within a defined space having an entrance;
a plurality of mobile wireless communications devices, each comprising a first near field communications (NFC) device and a second wireless transceiver capable of communicating with said first wireless transceiver;
a second NFC device adjacent the entrance of the defined space; and
a third NFC device within the defined space;
said controller configured to permit wireless communications of a given mobile wireless communications device from among said plurality of mobile wireless communications devices with said wireless access point based upon communication of the corresponding first NFC device with said second and third NFC devices.

2. The wireless communication system of claim 1
wherein said controller is configured to permit the wireless communications based upon sequential communication of the corresponding first NFC device with said second and third NFC devices.

3. The wireless communication system of claim 1
wherein each mobile wireless communications device has a unique identification associated therewith; and wherein said second and third NFC devices are configured to receive a respective unique identification from an adjacent mobile wireless communications device.

4. The wireless communication system of claim 3
wherein said controller is configured to permit wireless communications when a same respective unique identification is sequentially received at said second and third NFC devices.

5. The wireless communication system of claim 1
wherein said controller is configured to disable wireless communications with said wireless access point based upon a subsequent communication of the corresponding first NFC device with said second NFC device.

6. The wireless communication system of claim 1 further comprising at least one other wireless communications device within the defined space; and wherein said controller is configured to permit wireless communication between the given mobile wireless communications device and the at least one other wireless communications device based upon the communication of the corresponding first NFC device with said second and third NFC devices.

7. A wireless access point for a wireless communication system comprising a plurality of mobile wireless communications devices, each comprising a first near field communications (NFC) device and a second wireless transceiver, the wireless communications system further including a second NFC device adjacent the entrance of a defined space and a third NFC device within the defined space, the wireless access point comprising:
a first wireless transceiver and a controller associated therewith and configured to provide wireless communications within the defined space ;
said controller configured to permit wireless communications of a corresponding second wireless transceiver of a given mobile wireless communications device from among said plurality of mobile wireless communications devices with said first wireless transceiver based upon communication of the corresponding first NFC device with the second and third NFC devices.

8. The wireless access point of claim 7 wherein said controller is configured to permit wireless communications based upon sequential communication of the corresponding first NFC device with the second and third NFC devices.

9. The wireless access point of claim 7 wherein said controller is configured to disable wireless communications based upon a subsequent communication of the corresponding first NFC device with said second NFC device.

10. The wireless access point of claim 7 wherein said controller is configured to permit wireless communication between the respective second wireless transceiver of the given mobile wireless communications device and at least one other wireless communications device also based upon the communication of the corresponding first NFC device with the second and third NFC devices.

11. A method of operating a wireless access point in a wireless communication system for providing wireless communications within a defined space having an entrance, the wireless communication system including a plurality of mobile wireless communications devices each comprising a first near field communications (NFC) device, a second NFC device adjacent the entrance of the defined space, and a third NFC device within the defined space, the method comprising:
permitting wireless communications of a given mobile wireless communications device with the wireless access point based upon communication of a corresponding first NFC device with the second and third NFC devices.

12. The method of claim 11 wherein permitting wireless communications comprises permitting wireless communications based upon sequential communication of the corresponding first NFC device with the second and third NFC devices.

13. The method of claim 11 wherein permitting wireless communications further comprises permitting wireless communications of the given wireless communications device when a same respective unique identification associated therewith is sequentially received at the second and third NFC devices.

14. The method of claim 11 further comprising disabling the wireless communications based upon subsequent communication of the corresponding first NFC device with the second NFC device.

15. The method of claim 11 further comprising permitting wireless communications between the given mobile wireless communications device with at least one other wireless communications device in the defined space also based upon the communication of the corresponding first NFC device with the second and third NFC devices.

## Amended claims

### Amended claims in accordance with Rule 137(2) EPC.

**1.** A wireless communication system (10) comprising:
a wireless access point (20) comprising a first wireless transceiver (29) and a controller (22) associated therewith and configured to provide wireless communications within a defined space (14) having an entrance (24);
a plurality of mobile wireless communications devices (11a, 11b), each comprising a first near field communications, (NFC,) device (13a, 13b) and a second wireless transceiver (12a, 12b) capable of communicating with said first wireless transceiver;
a second NFC device (15) adjacent the entrance of the defined space and configured to restrict physical access to the defined space; and
a third NFC device (16) within the defined space;
said controller configured to permit wireless communications of a given mobile wireless communications device from among said plurality of mobile wireless communications devices with said wireless access point based upon communication of the corresponding first NFC device with said second and third NFC devices.

**2.** The wireless communication system (10) of claim 1 wherein said controller (22) is configured to permit the wireless communications based upon sequential communication of the corresponding first NFC device (13a) with said second and third NFC devices (15, 16).

**3.** The wireless communication system (10) of claim 1 wherein each mobile wireless communications device (11a, 11b) has a unique identification associated therewith; and wherein said second and third NFC devices (15, 16) are configured to receive a respective unique identification from an adjacent mobile wireless communications device.

**4.** The wireless communication system (10) of claim 3 wherein said controller (22) is configured to permit wireless communications when a same respective unique identification is sequentially received at said second and third NFC devices (15, 16).

**5.** The wireless communication system (10) of claim 1 wherein said controller (22) is configured to disable wireless communications with said wireless access point (20) based upon a subsequent communication of the corresponding first NFC device (13a) with said second NFC device (15).

**6.** The wireless communication system (10) of claim 1 further comprising at least one other wireless communications device (23) within the defined space; and wherein said controller (22) is configured to permit wireless communication between the given mobile wireless communications device (11a) and the at least one other wireless communications device based upon the communication of the corresponding first NFC device (13a) with said second and third NFC devices (15, 16).

**7.** A wireless access point (20) for a wireless communication system (10) comprising a plurality of mobile wireless communications devices (11a, 11b), each comprising a first near field communications, NFC, device (13a, 13b) and a second wireless transceiver (12a, 12b), the wireless communications system further including a second NFC device (15) adjacent the entrance (24) of a defined space (14) and configured to restrict physical access to the defined space and a third NFC device (16) within the defined space, the wireless access point comprising:
a first wireless transceiver (29) and a controller (22) associated therewith and configured to provide wireless communications within the defined space;
said controller configured to permit wireless communications of a corresponding second wireless transceiver of a given mobile wireless communications device from among said plurality of mobile wireless communications devices with said first wireless transceiver based upon communication of the corresponding first NFC device with the second and third NFC devices.

**8.** The wireless access point (20) of claim 7 wherein said controller (22) is configured to permit wireless communications based upon sequential communication of the corresponding first NFC device (13a) with the second and third NFC devices (15, 16).

**9.** The wireless access point (20) of claim 7 wherein said controller (22) is configured to disable wireless communications based upon a subsequent communication of the corresponding first NFC device (13a) with said second NFC device (15).

**10.** The wireless access point of claim 7 wherein said controller (22) is configured to permit wireless communication between the respective second wireless transceiver (12a) of the given mobile wireless communications device (11a) and at least one other wireless communications device (23) also based upon the communication of the corresponding first NFC device (13a) with the second and third NFC devices (15, 16).

**11.** A method of operating a wireless access point (20) in a wireless communication system (10) for providing wireless communications within a defined space (14) having an entrance (24), the wireless communication system including a plurality of mobile wireless communications devices (11a, 11b) each comprising a first near field communications, (NFC,) device (13a, 13b), a second NFC device (15) adjacent the entrance of the defined space and configured to restrict physical access to the defined space, and a third NFC device (16) within the defined space, the method comprising:
permitting wireless communications of a given mobile wireless communications device with the wireless access point based upon communication of a corresponding first NFC device with the second and third NFC devices.

**12.** The method of claim 11 wherein permitting wireless communications comprises permitting wireless communications based upon sequential communication of the corresponding first NFC device (13a) with the second and third NFC devices (15, 16).

**13.** The method of claim 11 wherein permitting wireless communications further comprises permitting wireless communications of the given wireless communications device (11a) when a same respective unique identification associated therewith is sequentially received at the second and third NFC devices (15, 15).

**14.** The method of claim 11 further comprising disabling the wireless communications based upon subsequent communication of the corresponding first NFC device (11a) with the second NFC device (15).

**15.** The method of claim 11 further comprising permitting wireless communications between the given mobile wireless communications device (11a) with at least one other wireless communications device (23) in the defined space also based upon the communication of the corresponding first NFC device (13a) with the second and third NFC devices (15, 16).
